## Europäisches Patentamt
## European Patent Office
## Office européen des brevets

(19)

(11) Veröffentlichungsnummer: **0 108 722**
**B1**

(12) **EUROPÄISCHE PATENTSCHRIFT**

(45) Veröffentlichungstag der Patentschrift:
05.11.86

(51) Int. Cl.⁴: **F 16 L 47/00,** F 16 L 25/00

(21) Anmeldenummer: **83810503.9**

(22) Anmeldetag: **31.10.83**

(54) **Rohrmuffe.**

(30) Priorität: **05.11.82 US 439440**

(43) Veröffentlichungstag der Anmeldung:
**16.05.84 Patentblatt 84/20**

(45) Bekanntmachung des Hinweises auf die Patenterteilung:
**05.11.86 Patentblatt 86/45**

(84) Benannte Vertragsstaaten:
**AT CH DE FR GB IT LI NL SE**

(56) Entgegenhaltungen:
**GB-A-777 859**
**US-A-3 236 543**
**US-A-4 013 309**

(73) Patentinhaber: **AMERON, INC., 4700 Ramona Boulevard, Monterey Park California 91754 (US)**

(72) Erfinder: **Greaves, Gerald George, 4832 Rhea Road, Wichita Falls Texas 76308 (US)**

(74) Vertreter: **Patentanwälte Grünecker, Kinkeldey, Stockmair & Partner, Maximilianstrasse 58, D-8000 München 22 (DE)**

EP 0 108 722 B1

## Beschreibung

Die Erfindung betrifft eine Einrichtung zum Verbinden der Enden zweier Kunststoffrohre, mit Muffen, die auf die zu verbindenden Enden aufgeschoben und mit diesen Enden verbunden sind, mit einem rohrförmigen Kupplungskörper, der sich über die Muffen erstreckt, mit von den Enden des rohrförmigen Kupplungskörpers einschraubbaren Anschlagtücken, die den axialen Verschiebeweg der Muffen begrenzen und mit einer auf der Innenseite des Kupplungskörpers wirkenden Dichtung.

Eine solche Rohrverbindungseinrichtung ist z.B. aus der GB-A-777 859 bekannt.

Bei dieser bekannten Einrichtung liegt zwischen den aufeinanderzuweisenden Stirnflächen der zu verbindenden Rohrenden ein Dichtungsring. Von außen und auch von innen in die sich konisch erweiterenden Rohrenden werden Muffen eingesetzt, über die ein rohrförmiger Kupplungskörper geschoben werden kann. Von den Enden her werden in den Kupplungskörper Anschlagtücke eingeschraubt, die auf die Muffen wirken und aufgrund des konischen Verlaufs von Muffen und Rohrenden die beiden Endstücke gegen die Dichtung pressen.

Neben dem Nachteil, daß bei dieser bekannten Einrichtung sowohl innerhalb als auch außerhalb der beiden Rohrenden jeweils Muffen benötigt werden, was den Aufwand der für die Verbindung benötigten Teile erhöht, haftet dieser vorbekannten Einrichtung insbesondere der Nachteil an, daß die Stirnflächendichtung gerade bei hohen Drücken nicht immer für eine zuverlässige Dichtwirkung sorgen kann. Insbesondere wenn die beiden Rohre in Axialrichtung wirkenden Kräften ausgesetzt sind, können sich Verschiebungen der Stirnflächen bezüglich der Dichtung ergeben, so daß insbesondere bei hohen Drücken dann die Dichtwirkung stark nachläßt.

Aus der US-A-3 236 543 ist es zwar bekannt, Dichtringe an anderen Stellen als zwischen den aufeinander zuweisenden Stirnflächen anzuordnen, was die Dichtwirkung erhöht, die dort beschriebene Verbindungseinrichtung ist aber insgesamt aufwendig und läßt sich nicht einfach lösen bzw. wieder zusammensetzen.

Schließlich ist aus der US-A-4 013 309 ebenfalls eine Einrichtung zum Verbinden der Enden zweier Kunststoffrohre bekannt, wobei jeweils von den Enden her eine aufschiebbare Muffe sitzt und ein rohrförmiger Kupplungskörper die beiden Muffen umhüllt. Diese bekannte Einrichtung hat jedoch den Nachteil, daß jedes auch nur geringfügige axiale Verschieben des Kupplungsrohrkörpers nach der Seite, von der her er auf die beiden Muffen aufgeschoben wurde, zu einer Lockerung der Verbindung der beiden Rohrstücke und damit zur Undichtigkeit an der Verbindungsstelle führt.

Im allgemeinen ist bei solchen Einrichtungen erwünscht, daß die Verbindung der beiden Rohrstücke in verhältnismäßig einfacher Weise lösbar ist, um z.B. ein an irgendeiner Stelle defekt gewordenes Rohrstück aus der Rohrleitung entfernen und gegen ein neues austauschen zu können. Hierzu ist vor allem eine gewisse axiale Verschiebbarkeit des einen Rohrstücks mit der Muffe gegen das andere erwünscht, ebenso wie die Verschiebbarkeit des umhüllenden Rohrkörpers gegenüber den Muffen, ohne daß dadurch die Dichtung zwischen Muffe und Kupplungskörper beeinträchtigt wird.

Der vorliegenden Erfindung liegt die Aufgabe zugrunde, eine Rohrverbindungseinrichtung der eingangs genannten Art anzugeben, die ein einfaches Lösen und ein einfaches Verbinden einerseits erlaubt, andererseits trotz gewisser axialer Verschiebbarkeit der Rohrstücke in dem Kupplungskörper gegeneinander eine zuverlässige Dichtwirkung insbesondere auch bei hohen Drücken sicherstellt.

Diese Aufgabe wird mit einer Einrichtung der eingangs genannten Art dadurch gelöst, daß zwischen den Außenwandungen der Muffen und der Innenwandung des Kupplungskörpers ein Zwischenraum belassen ist und daß die Muffen mindestens in ihrem die Dichtungselemente tragenden Bereich ein größeres radiales Ausdehnungsvermögen besitzen als der sie umgebende Kupplungsrohrkörper, so daß bei wachsendem inneren Leitungsdruck die Dichtungswirkung zwischen der Muffe und dem Rohrkörper erhöht wird.

Die Anordnung der Dichtungselemente am Umfang der Muffen erlaubt eine gewisse axiale Verschiebbarkeit der beiden verbindenden Rohrenden, ohne daß dadurch die Dichtwirkung beeinträchtigt wird. Bei hohen Drücken weitet sich die Muffe aus und drückt gegen den Kupplungskörper, der sich allerdings erfindungsgemäß weniger stark ausdehnt als die Muffen. Dadurch werden die Dichtungen sehr fest an der Innenseite gegen die Kupplungskörper gedrückt, so daß gerade bei hohen Drücken eine äußerst zuverlässige Dichtwirkung erhalten wird.

Bevorzugte Ausführungsformen der Einrichtung nach der Erfindung weisen eines oder mehrere der in den Unteransprüchen beschriebenen Merkmale auf.

Ein weiterer Erfindungsaspekt ist im Patentanspruch 7 beschrieben.

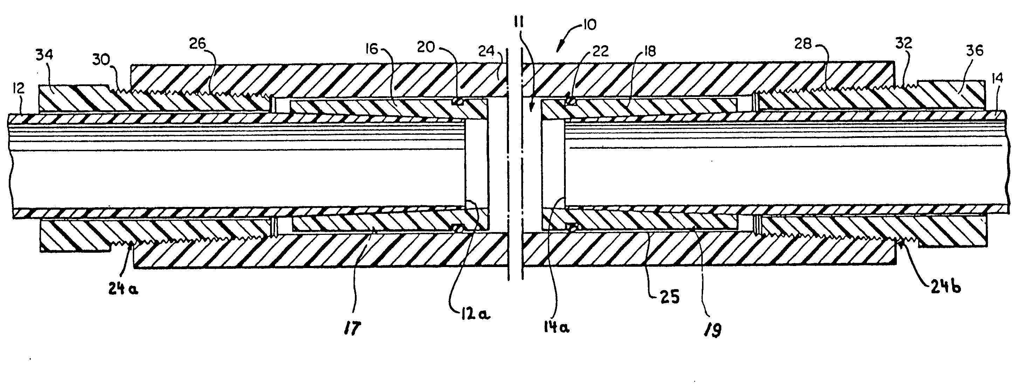

Weitere Einzelteile und Vorteile der Erfindung ergeben sich aus der nachfolgenden Beschreibung unter Bezugnahme auf die beigefügte Zeichnung, in welcher eine bevorzugte Ausführungsform der erfindungsgemäßen Rohrverbindungseinrichtung im Axialschnitt gezeigt ist.

Die dargestellte Ausführungsform 10 einer Rohrverbindungseinrichtung nach der Erfindung verbindet die beiden Rohrstücke 12 und 14 miteinander, zwischen deren einander zugekehrten Enden 12a und 14a eine Fuge 11 verbleibt. Die Rohrstücke 12 und 14 sind aus Kunststoff insbesondere aus faserverstärktem, warmhärtbaren Hochdruckkunststoff bestehen.

Die Verbindungseinrichtung 10 umfaßt ein Paar Kunststoffmuffen 16 und 18, die auch aus faserverstärktem, warmhärtbarem Kunststoff bestehen können, deren Durchlaß sich konisch vom einen zum anderen Muffenende hin erweitert; die Muffen sind mit sich entsprechend konisch verjüngenden Bereichen der betreffenden Rohrstücke 12, 14 verbunden, insbesondere verklebt, wobei jeder geeignete bekannte Verbundstoff zum Verkleben verwendet werden kann. Die Muffen 16 und 18 haben achsparellele, also nicht konisch abweichende Außenflächen (17, 19), und jede von ihnen hat in ihrer Außenfläche eine dem einen Muffenende benachbarte Ringnut, in welche ein Dichtungselement, vorzugsweise ein O-Ring 20, 22 aus Gummi oder dergleichen dichtendem Material eingelegt ist.

Die Ringnut und das Dichtungselement sind vorzugsweise in oder nahe derjenigen zur Längsachse des Rohrstücks 12, 14 quer verlaufenden Ebene, in welcher sich dasjenige Ende 12a, 14a des Rohrstücks befindet, an welchem die Wandstärke des letzteren dank der konischen Verjüngung der Außenwandung die geringere ist.

Die Verbindungseinrichtung 10 umfaßt weiter einen äußeren rohrförmigen Kupplungskörper 24, der aus faserverstärktem Kunststoff, der um einen Dorn gewickelt wurde, hergestellt sein kann, um eine glatte Innenwandung 25 zu erzielen. Die lichte Weite der Innenwandung 25 ist so bemessen, daß die Muffen 16 und 18 leicht in die einander entgegengesetzten offenen Enden 24a bzw. 24b des Kupplungskörpers 24 eingeschoben und auch wieder herausgezogen werden können, welche die Dichtungselemente 20 und 22 der Muffen 16 und 18 an der Innenfläche 25 des Kupplungskörpers 24 dichtend anliegen. Die an den entgegengesetzt liegenden Enden 24a, 24b des Kupplungskörpers 24 anschließenden Endbereiche der Innenfläche 25 des Kupplungskörpers 24 sind mit Muttergewinde 26, 28 versehen, das sich vorzugsweise nach dem Inneren des Kupplungskörpers hin konisch verjüngt.

Rohrförmige Anschlagglieder 34, 36, die auf die Rohrstücke 12, 14 aufgeschoben werden können, und auf der vom Rohrstückende 12a, 14a des betreffenden Rohrstücks 12, 14 abgewandten Seite der Muffen 16, 18 zu liegen kommen, weisen auf ihren Außenflächen Außengewinde 30, 32 auf, die so gewählt sind, daß sie in die Muttergewinde 26, 28 im Kupplungskörper 24 eingeschraubt werden können. Diese Anschlagglieder 34, 36, welche ebenfalls aus faserverstärktem Kunststoff hergestellt sein können, begrenzen die Längsverschieblichkeit der Rohrstücke 12, 14 und der auf ihnen festsitzenden Muffen 16, 18 gegenüber dem Kupplungskörper 24 und verhindern, daß die Muffen 16, 18 aus dem letzteren herausgezogen werden konnen.

Gemäß einem Merkmal der Erfindung besitzen die Muffen 16, 18 zumindest im Bereich der Dichtungselemente 20, 22 eine größere Neigung, sich bei Anwachsen des Druckes in der Rohrleitung auszudehnen, als dies beim Kupplungskörper 24 der Fall ist, so daß bei Erhöhung des inneren Rohrleitungsdruckes die Dichtungselemente 20 und 22 stärker an die Innenfläche 25 des Kupplungskörpers 24 angepreßt werden, und die Dichtungswirkung entsprechend erhöht wird. So kann z.B. der Kupplungskörper 24 größere Steifheit aufweisen und damit höheren Widerstand gegen Ausdehnung bieten als die Muffen 16, 18.

Faktoren, die zur Erzielung der geforderten Ausdehnungsdifferenz beitragen, können z.B. unterschiedliche Wandstärke von Muffen und Kupplungskörper, Lage der Dichtungselemente an denjenigen Enden der Rohrstücke, wo deren Wandstärke am kleinsten ist und die Verwendung unterschiedlicher Werkstoffe oder unterschiedlicher Herstellungsverfahren für Muffen und Kupplungskörper umfassen. Es können z.B. Faserverstärkungen verschiedener Orientierung verwendet werden. So können die Fasern sowohl im Muffen- als auch im Kupplungskörperwerkstoff vorwiegend unter einem Winkel von 54° gewickelt werden, während der Kupplungskörper noch mit einigen Wicklungen von 90° zur Rohrstücklängsachse versehen werden kann, um seine Steifigkeit zu erhöhen. Andererseits kann der Kupplungskörper gewickelte Fasern als Verstärkung enthalten, während die Muffen in bekannter Weise im Schleuderguß mit als Verstärkung beigemischtem kurzgehackten Fasern hergestellt werden können. In jedem Fall kann der Unterschied im Ausdehnungsvermögen der Muffen und des Kupplungskörpers so bemessen sein, daß bei Erhöhung des inneren Rohrleitungsdruckes auch die Dichtungswirkung in der Rohrverbindungseinrichtung (Rohrkupplung) sich erhöht, wobei ein innerer Rohrleitungsdruck bis zu oder sogar über 350 bar zulässig sein soll.

Eine Rohrverbindungseinrichtung der oben beschriebenen und dargestellten Art kann dazu dienen, die Reparatur einer gebrochenen Rohrleitung an Ort und Stelle durchzuführen. Dabei wird z.B. das gebrochene Rohrstück weggeschnitten, die benachbarten Rohrstückenden werden in geeigneter Weise, insbesondere durch Verringerung ihrer Wandstärke konisch zugespitzt, damit die Muffen 16, 18 auf sie aufgeschoben werden können, hierauf werden zunächst die Anschlagglieder 34 bzw. 36 und anschließend die Muffen 16 bzw. 18 auf die Rohrstücke aufgeschoben und dann die Muffen mit diesen fest, z.B. durch Verkleben verbunden, wobei die Muffen vorzugsweise nur soweit aufgeschoben werden, daß sie noch ein Stück über die Enden 12a, 14a der Rohrstücke 12, 14 nach dem anderen Rohrstück zu hinausragen. Der Kupplungskörper 24 wird dann zunächst frei über die eine der Muffen auf dem einen Rohrende geschoben, wobei die Rohrenden gegebenenfalls in Bezug auf einander etwas seitlich verschoben werden müssen, worauf der Kupplungskörper auch über die andere Muffe hinweggeschoben wird und schließlich die beiden Anschlagglieder 34, 36 in die mit Muttergewinde 26, 28 versehenen Enden 24a, 24b des Kupplungskörpers 24 eingeschraubt werden.

Die dargestellte Rohrverbindungseinrichtung kann auch bereits vor dem Einbau in eine Rohrleitung mit Rohrstücken 12 und 14 ausgerüstet sein, die in den Muffen in der dargestellten Art und Weise befestigt sind. Diese Anordnung liefert eine bequem einschiebbare Verbindungseinheit, die z.B. in eine Rohrleitung mit Hilfe zusätzlicher Kupplungsmittel oder dergleichen an den äußeren Enden entsprechender Rohrstücke 12 bzw. 14 angeschlossen werden kann.

Außerdem kann die Rohrverbindungseinrichtung nach der Erfindung, da bei ihrem Einbau ein zu verbindendes Rohrstück nicht gedreht werden braucht, auch als Rohrkupplung beim ursprünglichen Zusammenbau einer Rohrleitung verwendet werden. Hierbei kann dank der Merkmale der erfindungsgemäßen Verbindungseinrichtung die Rohrleitung von ihren außen gelegenen Enden nach der Mitte zu zusammengebaut werden, wobei die in der Mitte einzubauende Endkupplung durch die erfindungsgemäße Verbindungseinrichtung gebildet wird. Mittels dieser Verbindungseinrichtung können auch T-Rohrstücke und dergleichen in eine bestehende Rohrleitung eingebaut werden. Auch macht die Eigenschaft der erfindungsgemäßen Verbindungseinrichtung, Verschiebungen der Rohrstücke gegeneinander und auch gegenüber dem Kupplungskörper zu gestatten, sie zur Verwendung als Expansionskupplung geeignet. Die Verbindungseinrichtung kann in verschiedenen Größen hergestellt werden, und ist besonders geeignet zum Verbinden von Rohren mit einem Durchmesser im Bereich von z.B. 5 bis 10 cm, ohne auf Rohre mit solchen Durchmessern beschränkt zu sein.

Wie aus dem oben gesagten ersichtlich, verwirklicht die Erfindung eine Rohrverbindungseinrichtung, die für verschiedenartige Anwendung, insbesondere auf dem Gebiet von faserverstärkten Kunststoffrohrleitungen geeignet ist. Die erfindungsgemäße Rohrverbindungseinrichtung ist verhältnismäßig einfach gestaltet, leicht herzustellen und in einfacher Weise einzubauen und kann dabei hohen Innendrücken standhalten.

Während eine bevorzugte Ausführungsform vorangehend beschrieben wurde, ist die Erfindung nicht auf diese beschränkt, sondern kann im beanspruchten Rahmen abgeändert werden. So ist zwar der Kupplungskörper 24 geradlinig dargestellt, er kann aber auch gekrümmt wie in einem Kniestück oder T-förmig gestaltet sein.

## Patentansprüche

1. Einrichtung zum Verbinden der Enden (12a, 14a) zweier Kunststoffrohre (12, 14) mit Muffen (16, 18), die auf die zu verbindenden Enden aufgeschoben und mit diesen Enden verbunden sind, mit einem rohrförmigen Kupplungskörper (24), der sich über die Muffen (16, 18) erstreckt, mit von den Enden (24a, 24b) des rohrförmigen Kupplungskörpers (24) einschraubbaren Anschlagstücken (34, 36), die den axialen Verschiebeweg der Muffen (16, 18) begrenzen und mit einer auf der Innenseite des Kupplungskörpers wirkenden Dichtung (20, 22), dadurch gekennzeichnet, daß zwischen den Außenflächen (17, 19) der Muffen (16, 18) und der Innenfläche (25) des Kupplungskörpers (24) ein Zwischenraum belassen ist und daß die Muffen (16, 18) mindestens in ihrem die Dichtungselemente (20, 22) tragenden Bereich ein größeres radiales Ausdehnungsvermögen besitzen als der sie umgebende Kupplungskörper (24), so daß bei wachsendem inneren Leitungsdruck die Dichtungswirkung zwischen der Muffe (16, 18) und dem Kupplungskörpers (24) erhöht wird.

2. Einrichtung nach Anspruch 1, dadurch gekennzeichnet, daß sowohl die Muffen (16, 18) als auch der Rohrkörper (24) gewundene, faserverstärkte wärmehärtende Kunststoffkomponenten aufweisen, wobei die Fasern im Rohrkörper eine von denjenigen der Fasern in den Muffen verschiedene Windungsorientierung besitzen.

3. Einrichtung nach Anspruch 1, dadurch gekennzeichnet, daß der Kupplungskörper (24) eine Komponente aus gewickeltem faserverstärktem, wärmehärtbarem Kunststoff und die Muffen Komponenten aus faserverstärktem, warmhärtbarem Kunststoff-Schleuderguß enthalten.

4. Einrichtung nach wenigstens einem der Ansprüche 1 bis 3, dadurch gekennzeichnet, daß das Dichtungselement (20, 22) auf jeder der beiden Muffen (16, 18) nahe dem jeweils dem anderen Rohr zuweisenden Muffenende vorgesehen ist und daß dieses Muffenende über das zugeordnete Ende (12a, 14a) des betreffenden Rohrstücks (12, 14) übersteht und daß sich die den Muffendurchlaß umgebende Fläche nach dem anderen Muffenende hin konisch erweitert.

5. Einrichtung nach wenigstens einem der vorangegangenen Ansprüche, dadurch gekennzeichnet, daß die Außenfläche jeder der beiden Rohre (12, 14) sich nach deren einander zugekehrten Enden (12a, 14a) hin konisch verjüngt und daß die beiden Muffen (16, 18) entsprechende, nach ihren einander zugekehrten Enden hin verjüngende Durchlässe (16a, 18a) aufweisen.

6. Einrichtung nach wenigstens einem der vorangegangenen Ansprüche, dadurch gekennzeichnet, daß die Dichtungselemente (20, 22) auf den beiden Muffen (16, 18) etwa in einer quer zur Rohrachse verlaufenden Ebene liegt, die durch das im Muffeninneren befindliche Ende (12a, 14a) des betreffenden Rohres (12, 14) verläuft.

7. Einrichtung nach wenigstens einem der vorangegangenen Ansprüche, dadurch gekennzeichnet, daß die Dichtungselemente (20, 22) O-Ringe sind, die in Quernuten in den Außenwandungen (17, 19) der Muffen (16, 18) gelagert sind.

8. Zur Verwendung in der Einrichtung nach Anspruch 1 geeignetes Rohrstück einer Rohrleitung, auf dessen eines Ende eine Muffe aufgeschoben ist, die eine Dichtung gegen einen sie umgebenden Kupplungskörper trägt, dadurch gekennzeichnet, daß die Muffe bei erhöhtem inneren Leitungsdruck eine größere Expansionsneigung hat als der Kupplungskörper.

## Claims

1. A device for connecting the ends (12a, 14a,) of two plastics pipes (12, 14) having sockets (16, 18) which are slid over the ends to be connected and are connected to these ends, having a tubular coupling member (24) which extends over the sockets (16, 18), having stop members (34, 36) which can be screwed in from the ends (24a, 24b) of the tubular coupling member (24) and which limit the axial displacement travel of the sockets (16, 18) and having a seal (20, 22) acting on the inside of the coupling member, characterised in that a gap is left between the outer surfaces (17, 19) of the sockets (16, 18) and the inner surface (25) of the coupling member and in that the sockets (16, 18) have, at least in their region carrying the sealing elements (20, 22), a greater radial expansion capacity than the coupling member (24) surrounding them, so that, when the internal pressure in the pipeline increases, the sealing action between the sockets (16, 18) and the coupling member (24) is increased.

2. A device as claimed in claim 1, characterised in that both the sockets (16, 18) and the tubular member (24) comprise wound, fibre-reinforced thermosetting plastics components, the fibres in the tubular member having a different orientation of the winding turns from that of the fibres in the sockets.

3. A device as claimed in claim 1, characterised in that the coupling member (24) contains a component of wound fibre-reinforced, thermoplastic plastics material and the sockets contain components of fibre-reinforced, thermosetting plastics centrifugal casting.

4. A device as claimed in at least one of the claims 1 to 3, characterised in that the sealing element (20, 22) on each of the two sockets (16, 18) is provided close to the end of the socket facing the other pipe and in that this end of the socket projects beyond the associated end (12a, 14a) of the length of pipe in question (12, 14) and in that the surface surrounding the passage through the socket widens out in a taper towards the other end of the socket.

5. A device as claimed in at least one of the preceding claims characterised in that the outer surface of each of the two pipes (12, 14) becomes narrower in a taper towards the ends (12a, 14a) adjacent to one another and that the two sockets (16, 18) comprise corresponding passages (16a, 18a) which become narrower towards their ends adjacent to one another.

6. A device as claimed in at least one of the preceding claims, characterised in that the sealing element (20, 22) on each of the two sockets (16, 18) lies substantially in a plane which extends transversely to the pipe axis and which extends through that end (12a, 14a) of the pipe (12, 14) in question, which is in the interior of the socket.

7. A device as claimed in at least one of the preceding claims, characterised in that the sealing elements (20, 22) are O-rings which are mounted in transverse grooves in the outer walls (17, 19) of the sockets (16, 18).

8. A length of pipe of a pipeline suitable for use in the device as claimed in claim 1, over the end of which length of pipe a socket is slid which carries a seal with respect to a coupling member surrounding it, characterised in that, in the event of an increased internal pressure in the pipeline, the socket has a greater tendency to expand than the coupling member.

## Revendications

1. Dispositif pour raccorder les extrémités (12a, 14a) de deux tubes en matière plastique (12,14), comprenant: des manchons (16, 18) que l'on emboîte sur les extrémités à raccorder et qu'on relie à ces extrémités; un organe d'accouplement (24) tubulaire, s'étendant par-dessus les manchons (16,18); des pieces de butée (34, 36) susceptibles d'être vissées dans l'organe d'accouplement (24) tubulaire depuis les extrémités de ce dernier et limitant la course de déplacement axial des manchons (16, 18); et un moyen d'étanchéité (20, 22) agissant sur le côté intérieur de l'organe d'accouplement, caractérisé en ce qu'un espace intermédiaire subsiste entre les surfaces externes (17, 19) des manchons (16, 18) et la surface interne (25) de l'organe d'accouplement (24), et en ce que les manchons (16, 18) possèdent, au moins dans leur région portant les éléments d'étanchéité (20, 22), une faculté de dilatation radiale plus importante que l'organe d'accouplement (24) qui les entoure, de sorte que l'effet d'étanchéité entre les manchons (16, 18) et l'organe d'accouplement (24) se trouve renforcé lorsque la pression à l'intérieur de la conduite augmente.

2. Dispositif selon la revendication 1, caractérisé en ce que les manchons (16, 18) et l'organe d'accouplement tubulaire (24) présentent des composants de matière plastique thermodurcissable du type à bobinage, renforcés par des fibres ayant, dans l'organe d'accouplement tubulaire, une orientation de bobinage différente de celles des fibres dans les manchons.

3. Dispositif selon la revendication 1, caractérisé en ce que l'organe d'accouplement (24) présente un composant de matière plastique thermodurcissable du type à bobinage, renforcé par des fibres, et les manchons comportent des composants de matière plastique thermodurcissable du type à moulage matière plastique thermodurcissable du type à moulage par centrifugation renforcés par des fibres.

4. Dispositif selon au moins l'une des revendications 1 à 3, caractérisé en ce que, sur chacun des deux manchons, l'élément d'étanchéité (20, 22) est prévu près de l'extrémité de ce manchon tournée vers l'autre tube, en ce que cette extrémité du manchon déborde au-delà de l'extrémité conjuguée (12a, 14a) du tube (12, 14) concerné, et en ce que la surface entourant la lumière de chaque manchon s'élargit en cône vers l'autre extrémité de ce manchon.

5. Dispositif selon au moins l'une des revendications précédentes, caractérisé en ce que la surface extérieure de chacun des deux tubes (12, 14) converge en cône en direction des extrémités en regard (12a, 14a) des tubes, et en ce que les deux manchons (16, 18) présentent des lumières (16a, 18a) correspondantes, convergeant vers leurs extrémités en regard.

6. Dispositif selon au moins l'une des revendications précédentes, caractérisé en ce que les éléments d'étanchéité (20, 22) sur les deux manchons (16, 18) se trouvent sensiblement dans un plan perpendiculaire à l'axe des tubes, ce plan passant par l'extrémité (I2a, 14a) du tube concerné (12, 14) située à l'intérieur du manchon.

7. Dispositif selon au moins l'une des revendications précédentes, caractérisé en ce que les éléments d'étanchéité (20, 22) sont des joints toriques logés dans des gorges transversales des parois externes (17, 19) des manchons (16, 16).

8. Tronçon de tube d'une conduite tubulaire, convenant pour être utilisé dans le dispositif selon la revendication 1, un manchon étant emboîté sur sa première extrémité et portant un élément d'étanchéité par rapport à un organe d'accouplement entourant ce manchon, caractérisé en ce que la tendance à l'expansion du manchon en présence d'une pression accrue à l'intérieur de la conduite est plus importante que la tendance à l'expansion de l'organe d'accouplement.